## Europäisches Patentamt

## European Patent Office

## Office européen des brevets

(11) Veröffentlichungsnummer: **0 260 381**
**B1**

(12) **EUROPÄISCHE PATENTSCHRIFT**

(45) Veröffentlichungstag der Patentschrift:
**12.09.90**

(21) Anmeldenummer: **87107453.0**

(22) Anmeldetag: **22.05.87**

(51) Int. Cl.⁵: **F02B 31/00, F02D 11/04, F02D 9/02**

(54) Betätigungseinrichtung.

(30) Priorität: **06.09.86 DE 3630432**

(43) Veröffentlichungstag der Anmeldung:
**23.03.88 Patentblatt 88/12**

(45) Bekanntmachung des Hinweises auf die Patenterteilung:
**12.09.90 Patentblatt 90/37**

(84) Benannte Vertragsstaaten:
**DE ES FR GB IT NL SE**

(56) Entgegenhaltungen:
**EP-A- 0 174 389**
**DE-U- 1 986 850**

**PATENT ABSTRACTS OF JAPAN, Band 10, Nr. 320 (M-530) [2376], 30. Oktober 1986; & JP-A-61 126 320 (NISSAN MOTOR CO LTD) 13-06-1986 (Cat. A)**

(73) Patentinhaber: **Dr.Ing.h.c. F. Porsche Aktiengesellschaft, Porschestrasse 42, D-7000 Stuttgart 40(DE)**

(72) Erfinder: **Gröger, Klaus, Saarstrasse 26, D-7251 Hemmingen(DE)**
Erfinder: **Ampferer, Herbert, Dipl.-Ing. (FH), Metternzimmererstrasse 24, D-7123 Sachsenheim 2(DE)**

## Beschreibung

Die Erfindung betrifft eine Betätigungseinrichtung für mehrere, vorzugsweise zu einer Baugruppe eines Saugrohres einer mehrzylindrigen Brennkraftmaschine gehörender Drosselklappen, wobei die synchron zu betätigenden Drosselklappen mit ihren Lagerwellen an außerhalb der Saugrohre verlaufende Hebel angeschlossen sind, die mit einem gemeinsamen Gestänge zusammenwirken, und wobei zwischen dem Gestänge und den Lagerwellen der Drosselklappen nachgiebige Glieder vorgesehen sind und das Gestänge mit einer Stellvorrichtung in Verbindung steht.

Es ist bekannt, EP-A 0 174 389, mehrere Drosselklappen mit einem Gestänge zu betätigen, wobei zwischen dem Gestänge und Hebeln dieser Drosselklappen Blattfedern vorgesehen sind.

Bei einer bekannten Brennkraftmaschine (DE-GM 1 986 850) sind zwei getrennte Saugrohre zu einem Zylinder geführt, der zwei Einlaßventile aufweist. Beide Saugrohre sind mit Drosselklappen versehen, die unabhängig voneinander verstellt werden.

Aufgabe der Erfindung ist es, an einer Betätigungseinrichtung mehrerer synchron zu betätiger Saugrohr-Drosselklappen einer mehrzylindrigen Brennkraftmaschine solche Vorkehrungen zu treffen, daß die Betätigungseinrichtung leicht montierbar ist und übliche Toleranzen, die sich stets zwischen einzelnen Drosselklappen ergeben, ohne besondere Einstellvorgange ausgeglichen werden.

Erfindungsgemäß wird dies durch die kennzeichnenden Merkmale des Anspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß durch die nachgiebigen Elemente und die die Drosselklappen in ihre geschlossene Endstellung spannende Vorrichtung übliche Toleranzen, die nur mit einem unvertretbar hohen Aufwand zu reduzieren wären, ausgeglichen werden. Damit ist sichergestellt, daß in der geschlossenen Stellung der Drosselklappen kein Medium - Kraftstoff-Luft-Gemisch - über besagte Klappen in den Brennraum gelangt. Dies ist von besonderer Bedeutung bei Brennkraftmaschinen mit zwei Einlaßventilen und zwei getrennten Saugrohrabschnitten pro Zylinder, wovon zumindest einer dieser Abschnitte mit einer zu- bzw. abschaltbaren Drosselklappe versehen ist. Mit einer Saugrohrgestaltung dieser Art besteht die Möglichkeit, den Drehmomentverlauf der Brennkraftmaschine bei niedrigen und mittleren Drehzahlen erheblich zu verbessern.

Die nachgiebigen Glieder können auf einfache Weise durch drehelastische Lager gebildet werden, die den Hebeln zugeordnet sind. Mittels der einzigen Betätigungsstange wird nicht nur der Bauaufwand reduziert, sondern auch der Montage- und Einstellvorgang der Betätigungseinrichtung erleichtert.

In der Zeichnung sind Ausführungsbeispiele der Erfindung dargestellt, die nachstehend näher beschrieben sind.

Fig. 1 einen Teilquerschnitt einer Brennkraftmaschine im Bereich von Saugrohren,
Fig. 2 eine Ansicht in Pfeilrichtung A der Fig. 1,
Fig. 3 einen Schnitt nach der Linie III-III der Fig. 1,
Fig. 4 eine Ansicht in Pfeilrichtung B der Fig. 2,
Fig. 5 einen Schnitt nach der Linie V-V der Fig. 3,
Fig. 6 eine Einzelheit Y der Fig.3 in grösserem Maßstab.

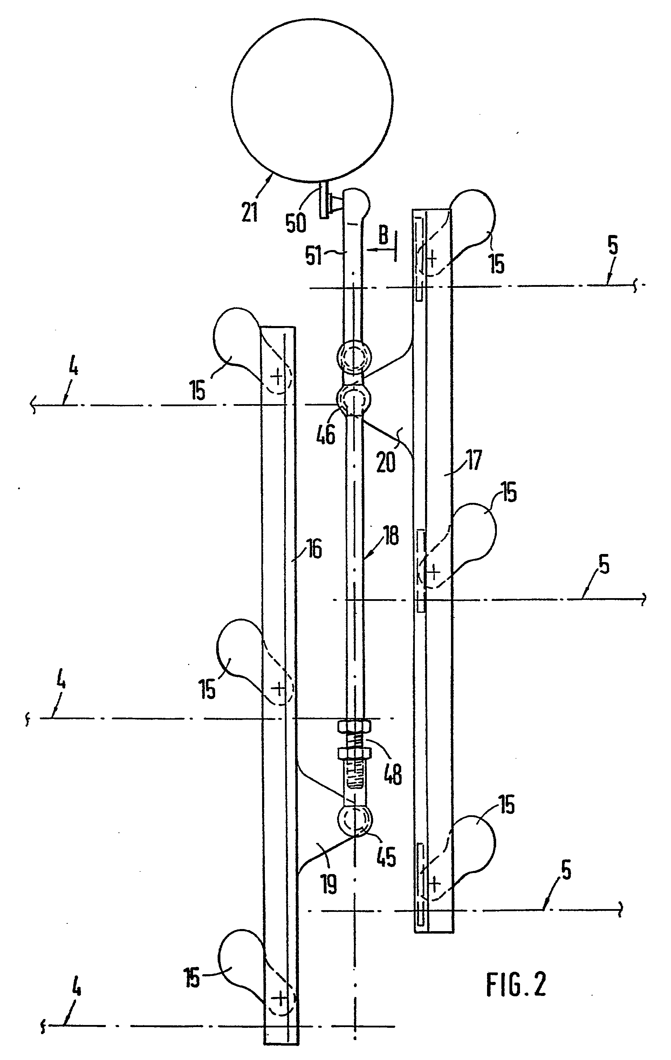

Die Brennkraftmaschine 1 weist V-förmig angeordnete Zylinderreihen 2, 3 auf, deren Mittellängsachsen mit 4 und 5 bezeichnet sind; jede Zylinderreihe weist 3 Zylinder auf (Fig. 2).

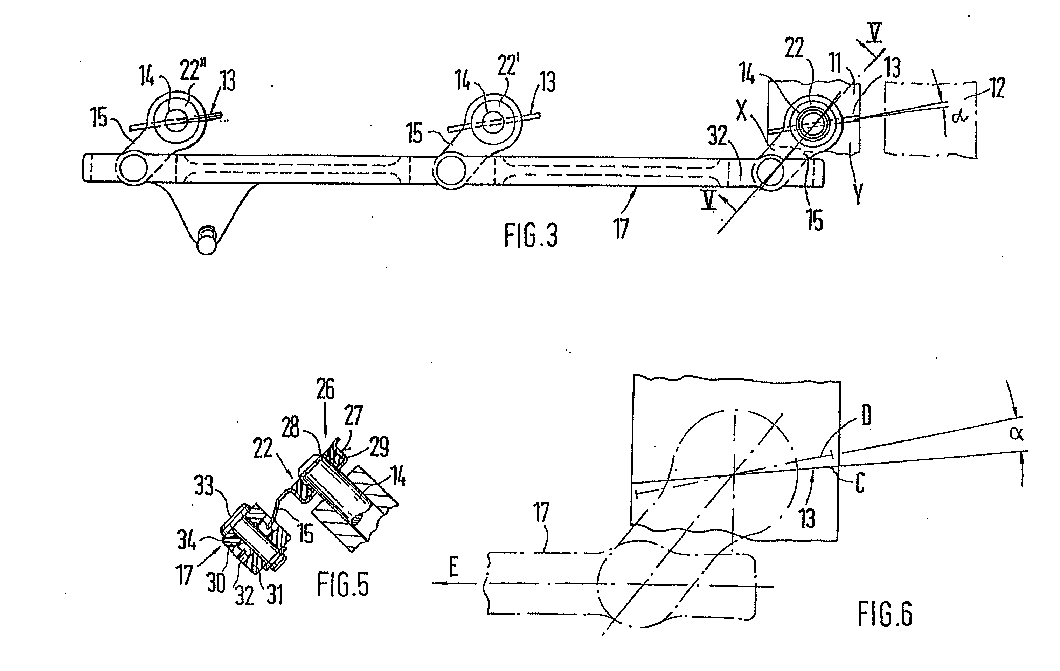

Die Zylinderreihen 2, 3 umfassen nicht näher dargestellte Zylinderköpfe 7, 8, die pro Zylinder mit zwei Einlaßventilen versehen sind, was ebenfalls nicht dargestellt ist. Den Einlaßventilen vorgeschaltet sind Saugrohre 9, 10, die jeweils für einen Zylinder getrennte Saugrohrabschnitte 11, 12 (Fig. 3) aufweisen.

Nur die Saugrohrabschnitte 11 sind mit Drosselklappen 13 versehen, d. h., beim Betrieb der Brennkraftmaschine werden ihre Brennräume ständig über die Saugrohrabschnitte 12 mit Medium - Kraftstoff-Luft-Gemisch - versorgt. Hingegen sind die Saugrohrabschnitte 11 mittels der Drosselklappen 13 bis zu einer definierten mittleren Drehzahl der Brennkraftmaschine geschlossen, wodurch ihr Drehmomentverlauf im besagten Betriebsbereich verbessert wird.

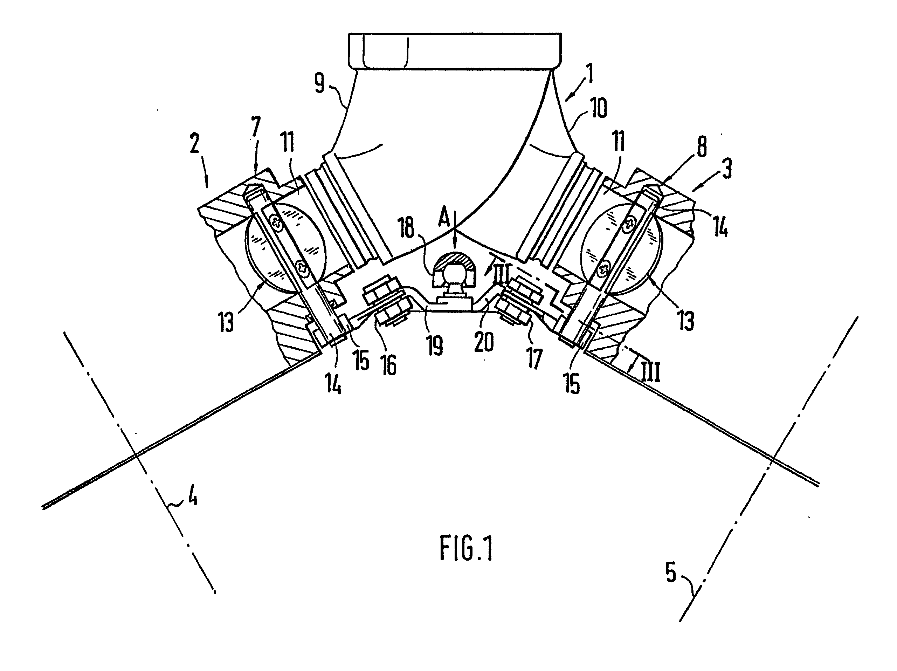

Die Drosselklappen 13 sind an parallel zu den Mittellängsachsen 4, 5 ausgerichteten Lagerwellen 14 befestigt (Fig. 1), die auf der einen Seite aus dem Saugrohrabschnitt 11 herausgeführt und mit Hebeln 15 versehen sind. Die Hebel 15 wirken mit Gestängen 16, 17 zusammen, dergestalt, daß die Drosselklappen 13 synchron betätigt werden, wobei die Hebel 15 einer Zylinderreihe 4 oder 5 mittels einem einzigen Gestänge 16 oder 17 betätigt werden.

Zwischen den parallel verlaufenden Gestängen 16, 17 erstreckt sich eine Betätigungsstange 18, die mit seitlichen Konsolen 19, 20 der Gestänge 16, 17 und einer Vorrichtung 21 zusammenwirkt. Die Vorrichtung 21 ist eine Unterdruck-Stellvorrichtung, die die Drosselklappen 13 in Endstellungen - offen oder geschlossen - bewegt.

Damit sichergestellt ist, daß alle Drosselklappen 13 in ihren geschlossenen Endstellungen mediumdicht mit den Saugrohrabschnitten 11 zusammenarbeiten, sind zwischen den Gestängen 16, 16 und den Lagerwellen 14 nachgiebige Glieder 22, 22', 22" vorgesehen, die unter Krafteinwirkung der Einrichtung 21 Toleranzen der Betätigungseinrichtung, vorzugsweise Winkeltoleranzen der Drosselklappen 13, ausgleichen.

Jedes Glied 22 wird durch drehelastisches Lager 26 gebildet, das zwischen der Lagerwelle 14 und dem Hebel 15 angeordnet ist (Fig. 5). Das Lager 26 wird durch einen topfförmigen Abschnitt 27 des Hebels 15 und eine auf der Lagerwelle 14 festgesetzte Hülse 28 gebildet, die unter Vermittlung eines elastischen Körpers 29 miteinander verbunden sind.

Zur Aufnahme des Hebels 15 am aus Kunststoff bestehenden Gestänge 17 weist letzteres einen parallele Wandungen 30, 31 umfassenden Aufnahmeabschnitt 32 auf. Zwischen den Wandungen 30, 31 erstreckt sich der Hebel 15. Die Verbindung zwischen Hebel 15 und Gestänge 16 wird mittels eines Bolzens 33 bewerkstelligt, der eine Bohrung 34 des Gestänges 17 durchdringt.

Die Betätigungseinrichtung 18, die über Kugelkopfverbindungen 45, 46 mit den Konsolen 19, 20 der Gestänge 16, 17 zusammenarbeitet, weist eine Stellvorrichtung 48 auf; letztere dient zur Längenverstellung der Betätigungsstange 18 (Fig. 2).

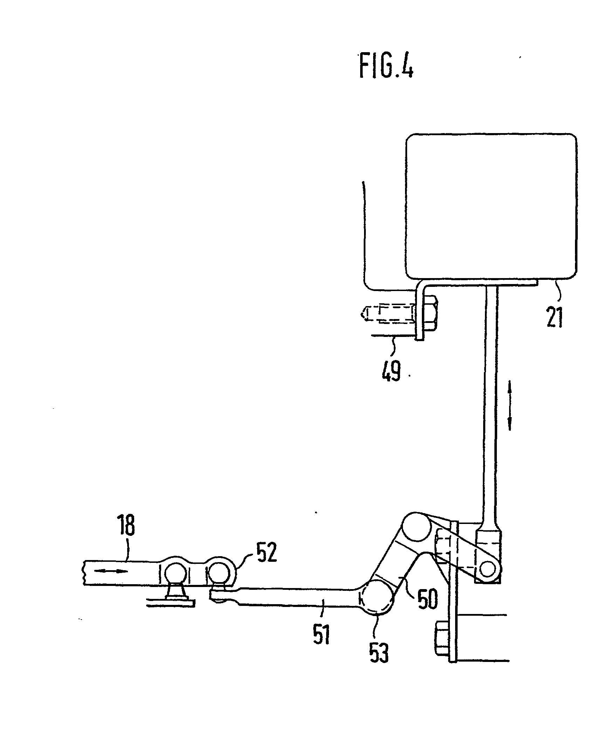

Zwischen Betätigungsstange 18 und der an einem Gehäuse 49 der Brennkraftmaschine 1 befestigten Einrichtung 21 ist ein Kniehebel 50 und ein Verbindungshebel 51 vorgesehen (Fig. 4). Der Verbindungshebel 51 wirkt über Kugelkopfverbindungen 52, 53 mit der Betätigungsstange 18 und dem Winkelhebel 50 zusammen.

## Patentansprüche

1. Betätigungseinrichtung für mehrere, vorzugsweise zu einer Baugruppe einer mehrzylindrigen Brennkraftmaschine gehörende Drosselklappen (13), wobei die synchron zu betätigenden Drosselklappen (13) mit ihren Lagerwellen (14) an außerhalb der Saugrohre verlaufende Hebel (15) angeschlossen sind, die mit einem gemeinsamen Gestänge (16, 17) zusammenwirken, Und wobei zwischen dem Gestänge (16, 17) und den Lagerwellen (14) der Drosselklappen (13) nachgiebige Glieder (22, 23, 24, 25) vorgesehen sind, und das Gestänge (16, 17) mit einer Stellvorrichtung (21) in Verbindung steht, dadurch gekennzeichnet, daß jedes nachgiebige Glied (22) durch ein Lager (26) gebildet ist, das einen Körper aus elastischem Material zwischen der Lagerwelle (14) und dem Hebel (15) aufweist und daß die Stellvorrichtung (21) die Drosselklappen (13) mittels der Hebel (15) in ihre geschlossenen Endstellungen spannt.

2. Betätigungseinrichtung nach Anspruch 1, dadurch gekennzeichnet, daß das Lager (26) durch einen topfförmigen Abschnitt (27) des Hebels (15) und eine auf der Lagerwelle (14) festgesetzte Hülse (28) gebildet ist, wobei die Hülse (28) und der Abschnitt (27) mittels eines elastischen Körpers (29) verbunden sind.

3. Betätigungseinrichtung nach Anspruch 1, bei der die Brennkraftmaschine (2) an vorzugsweise V-förmig angeordneten Zylinderreihen angebrachte Saugrohre umfaßt, dadurch gekennzeichnet, daß die Gestänge (16, 17) der Drosselklappen (13) der Saugrohre beider Zylinderreihen (2, 3) mittels einer einzigen an die Einrichtung angeschlossenen Betätigungsstange (18) betätigt werden, die zwischen den Gestängen (16, 17) verläuft.

4. Betätigungseinrichtung nach Anspruch 3, dadurch gekennzeichnet, daß die Betätigungsstange (18) mit von den Gestängen (16, 17) weggeführten Konsolen (19, 20) zusammenarbeitet.

5. Betätigungseinrichtung nach Anspruch 3, dadurch gekennzeichnet, daß die Betätigungsstange (18) eine Vorrichtung (48) zur Längsverstellung aufweist.

6. Betätigungseinrichtung nach Anspruch 1, dadurch gekennzeichnet, daß jedes vorzugsweise aus Kunststoff bestehende Gestänge (16, 17) im Bereich der Hebel (15) einen parallele Wandungen (30, 31) umfassenden Aufnahmeabschnitt (32) aufweist, wobei sich zwischen den Wandungen (30, 31) die Hebel (15) erstrecken.

## Revendications

1. Dispositif d'actionnement pour plusieurs papillons des gaz (13) faisant partie d'un groupe moteur à plusieurs cylindres, le papillons (13), qui doivent être actionnés en synchronisme, étant reliés par leurs axes de positionnement (14) à des leviers (15) s'étendant à l'extérieur des tubes d'admission et coopérant avec une tringle commune (16, 17), des éléments flexibles (22, 23, 24, 25) étant prévus entre la tringle (16, 17) et les axes de positionnement (14) des papillons (13), et la tringle (16, 17) étant reliée à un dispositif de réglage (21), caractérisé en ce que chaque élément flexible (22) est formé par un palier (26) qui comporte un corps en matériau élastique entre l'axe de positionnement (14) et le levier (15), et en ce que le dispositif de réglage (21) maintient les papillons (13) dans leur positions terminales fermées au moyen des leviers (15).

2. Dispositif d'actionnement selon la revendication 1, caractérisé en ce que le palier (26) est constitué par une portion (27) en forme de pot du levier (15) et un manchon (26) fixé sur l'axe de positionnement (14), le manchon (28) et la portion (27) étant reliés au moyen d'un corps élastique (29).

3. Dispositif d'actionnement selon la revendication 1, dans le cas d'un moteur à combustion interne (2) comportant des tubes d'admission placés sur des rangées de cylindres disposées de préférence en V, caractérisé en ce que les tringles (16, 17) des papillons des gaz (13) des tubes d'admission des deux rangées de cylindres (2, 3) sont actionnées au moyen d'une seule tringle s'étend entre les tringles (16, 17).

4. Dispositif d'actionnement selon la revendication 3, caractérisé en ce que la tige d'actionnement (18) coopère avec des consoles (19, 20) partant des tringles (16, 17).

5. Dispositif d'actionnement selon la revendication 3, caractérisé en ce que la tige d'actionnement (18) comporte un dispositif (48) pour le réglage en longueur.

6. Dispositif d'actionnement selon la revendication 1, caractérisé en ce que chaque tringle (16, 17), de préférence en matière plastique comporte dans la zone des leviers (15) une portion de logement (32) comportant des parois parallèles (30, 31), les leviers (15) s'étendant entre les parois (30, 31).

## Claims

1. An actuating device for a plurality of butterfly valves (13) preferably belonging to a sub-assembly of a multiple-cylinder internal combustion engine, the butterfly valves (13) to be actuated synchronously being connected by their bearing shafts (14) to levers (15) which extend outside the suction pipes and which cooperate with a common rod system (16, 17), and resilient members (22, 23, 24, 25) being provided between the rod system (16, 17) and the bearing shafts (14) of the butterfly valves (13), and the rod system (16, 17) is connected to a setting device (21), characterized in that each resilient member (22) is formed by a bearing (26) comprising a body of resilient material between the bearing shaft (14) and the lever (15), and the setting device (21) clamps the butterfly valves (13) in their closed end positions by means of the levers (15).

2. An actuating device according to Claim 1, characterized in that the bearing (26) is formed by a pot-shaped portion (27) of the lever (15) and a sleeve (28) secured to the bearing shaft (14), the sleeve (28) and the portion (27) being connected by means of a resilient member (29).

3. An actuating device according to Claim 1, in which the internal combustion engine (2) comprises induction pipes mounted on rows of cylinders preferably arranged in a V-shape, characterized in that the rod systems (16, 17) of the butterfly valves (13) of the induction pipes of the two rows of cylinders (2, 3) are actuated by means of a single actuating rod (18) attached to the device and extending between the rod systems (16, 17).

4. An actuating device according to Claim 3, characterized in that the actuating rod (18) cooperates with brackets (19, 20) directed away from the rod systems (16, 17).

5. An actuating device according to Claim 3, characterized in that the actuating rod (18) comprises a device (48) for longitudinal adjustment.

6. An actuating device according to Claim 1, characterized in that each rod system (16, 17) preferably consisting of plastics material is provided in the region of the levers (15) with a receiving portion (32) comprising parallel walls (30, 31), the levers (15) extending between the walls (30, 31).

FIG.1

EP 0 260 381 B1

FIG.2

FIG.3

FIG.5

FIG.6

# FIG.4